# EUROPÄISCHE PATENTSCHRIFT

(11) **EP 1 995 563 B1**
(45) Veröffentlichungstag und Bekanntmachung des Hinweises auf die Patenterteilung: **25.01.2012**
(21) Anmeldenummer: 08004865.5
(22) Anmeldetag: 14.03.2008
(51) Int. Cl.: G01C 21/34, G08G 1/0968

(54) **Verfahren zum Betrieb eines Navigationssystems**
Method for operating a navigation system
Procédé destiné au fonctionnement d'un système de navigation

(30) Priorität: 21.05.2007 DE 102007023804
(43) Veröffentlichungstag der Anmeldung: 26.11.2008
(73) Patentinhaber: Navigon AG, 20251 Hamburg (DE)
(72) Erfinder: Engel, Christof, 97072 Würzburg (DE)
(74) Vertreter: von den Steinen, Axel

(56) Entgegenhaltungen:
- EP-A- 0 795 835
- EP-A- 1 139 067
- EP-A- 1 777 499
- WO-A-01/59408

## Beschreibung

Die Erfindung betrifft ein Verfahren zum Betrieb eines Navigationssystems nach dem Oberbegriff des Anspruchs 1.

Es sind Navigationssysteme, beispielsweise mobile Navigationsgeräte für das Kraftfahrzeug, bekannt, bei denen der Benutzer einen Startpunkt und einen Zielpunkt eingeben kann. Ein Routenrechner berechnet dann eine Bewegungsroute, die den Benutzer vom Startpunkt zum Zielpunkt führt, wobei die in einer Datenbank gespeicherten Wegenetzdaten berücksichtigt werden. Bei der Berechnung der Bewegungsroute wird dabei entweder die schnellste Bewegungsroute oder die kürzeste Bewegungsroute zwischen Startpunkt und Zielpunkt berechnet.

Die EP 1 217 331 A1 beschreibt ein Verfahren, bei dem einzelne Streckenabschnitte in der Wegenetzdatenbank geschätzten Bewegungszeiten zugeordnet sind. Diese geschätzten Bewegungszeiten können dabei durch Verkehrsmeldungen dynamisch modifiziert werden. Bei der Routenplanung werden die geschätzten Bewegungszeiten dazu genutzt, die Gesamtbewegungszeit zu prognostizieren und somit die schnellste Route für den Benutzer zu errechnen.

Die DE 198 23 123 C2 und die EP 1 571 420 A2 beschreiben Verfahren, bei denen eine gewünschte Ankunftszeit vorgegeben werden kann. Ausgehend von dieser vorgegebenen Ankunftszeit wird dem Benutzer eine Warnung ausgegeben, zu welchem Zeitpunkt er die Fahrt spätestens antreten muss, um die gewünschte Ankunftszeit einhalten zu können. Dabei werden unterschiedliche Randbedingungen, wie die Verkehrslage, in Betracht gezogen.

Die EP 0 795 835 A1 zeigt ein System, welches automatisch einen Reiseplan auf einem portablen Gerät in einem Fahrzeug erstellt. Der Reiseplan enthält bestimmte Ziele, wobei die Route anhand einer ungefähren Positionsangabe und einer Zeiteingabe erstellt wird. Dazu weist das System eine Informationseinheit auf, in die ein Satz von grundsätzlichen Reiseinformationen eingegeben wird, der mit einer Datenbank abgeglichen wird. Aus dieser Datenbank werden bestimmte Einrichtungen in diesen Datensatz eingeführt und es entsteht ein tatsächlicher Routenplan. Abschließend wird dieser Routenplan ausgegeben.

Die EP 1 139 067 A2 zeigt ein Navigationsgerät und ein Verfahren zur Tourenberechnung, wobei eine Routenberechnung zur Ansteuerung von Zielen vorgeschlagen wird, die dazu dient von einem aktuellen Standort anhand von allgemeinen Eingaben eine Route zu Zielen zu berechnen. Insbesondere soll dazu ein Rundkurs berechnet werden, wobei die Tour während der Fahrt automatisch angepasst werden kann. Eine Fremdenführerfunktion berücksichtigt dabei die Tourenlänge, Reisedauer und die Zahl sowie die Art der Ziele als Eingabeparameter, wobei insbesondere auch die geplante Verweildauer mitberücksichtigt wird.

Die WO 01/59408 A1 zeigt ein Verfahren zur Routenplanung in einem Navigationssystem in drei Schritten, wobei im ersten Schritt eine Menge erster Fahrtrouten auf der Basis eines Optimierungskriteriums von ortsunabhängigen und situationsspezifischen Nutzerpräferenzen ermittelt wird. Im zweiten Schritt werden die ersten Fahrtrouten auf der Basis ortsabhängiger und situationsspezifischer Nutzerpräferenzen in Teilabschnitten neu berechnet. Im dritten Schritt werden die ermittelten Fahrtrouten anhand mindestens eines Bewer-tungskriteriums priorisiert. Vorzugsweise werden dem Nutzer nach jedem Schritt die erhaltenen Zwischenergebnisse angezeigt, so dass er gegebenenfalls eine der Routen auswählen und das Verfahren damit beenden kann.

Die EP 1 777 499 A2 zeigt ein Verfahren zur Ermittlung einer Route auf einer digitalen Karte eines Navigationssystems, mit dem mittels einer Routensuche ein Routenziel gesucht wird. Um das Navigationssystem noch benutzerfreundlicher zu gestalten, schlägt die Erfindung vor, dass die Ermittlung der Route auch einer Parkplatzsuche oder zum Schlendern dient. Dabei steht nicht die Erreichung eines Ziels im Vordergrund, sondern die Möglichkeit in der Umgebung des Ziels eine möglichst große Anzahl von Straßen zu durchfahren.

Nachteilig an den bekannten Verfahren zum Betrieb von Navigationssystemen ist es, dass regelmäßig davon ausgegangen wird, dass die Strecke zwischen Startpunkt und Zielpunkt in möglichst kurzer Zeit bzw. entlang einer möglichst kurzen Strecke überrundet werden soll. Für bestimmte Aktivitäten, insbesondere Freizeitaktivitäten, ist dieser Betrachtungsansatz jedoch unzureichend. Gerade bei Freizeitaktivitäten stellt nämlich die zur Verfügung stehende Zeit eine Anfangsrandbedingung dar, die bei bekannten Navigationssystemen jedoch keine Berücksichtigung finden kann.

Ausgehend von diesem Stand der Technik ist es deshalb Aufgabe der vorliegenden Erfindung, ein neues Verfahren zum Betrieb eines Navigationssystems vorzuschlagen, bei dem die dem Benutzer zur Verfügung stehende Zeit als Anfangsrandbedingung Berücksichtigung finden kann.

Diese Aufgabe wird durch ein Verfahren nach der Lehre des Anspruchs 1 gelöst.

Vorteilhafte Ausführungsformen der Erfindung sind Gegenstand der Unteransprüche.

Das erfindungsgemäße Verfahren beruht auf dem Grundgedanken, dass dem Navigationssystem zu Beginn der Startpunkt, der Zielpunkt und die zur Verfügung stehende Zeit (Richtzeit) als Anfangsrandbedingungen vorgegeben werden. Dies bedeutet mit anderen Worten, dass der Benutzer dem System vorgibt, wo er starten will, wo er ankommen will, wie viel Zeit er ungefähr für die Fahrt vom Startpunkt zum Zielpunkt zur Verfügung hat. Ausgehend von diesen Anfangsrandbedingungen berechnet das Navigationssystem dann eine Bewegungsroute mit einer für die Fortbewegung vom Startpunkt zum Zielpunkt prognostizierten Bewegungszeit. Die Route wird dabei durch entsprechende Berechnungsverfahren so lange verändert, bis die prognostizierte Bewegungszeit mit der vorgegebenen Richtzeit übereinstimmt.

Im Ergebnis hat der Benutzer damit die Möglichkeit, die ihm zur Verfügung stehende Zeit optimal für die Streckenbewältigung auszunutzen. Dies ist insbesondere für Freizeitaktivitäten, wie beispielsweise Joggen, Wandern, Fahrradfahren, Motorradfahren oder Stadtbesichtigungen, von großem Vorteil.

Es sind Routingverfahren bekannt, bei denen der tatsächliche Bewegungsfortschritt dynamisch mit dem prognostizierten Bewegungsfortschritt verglichen wird. Derartige dynamische Berechnungsverfahren sind in Kombination mit dem erfindungsgemäßen Ansatz von besonders großem Vorteil. Denn sobald eine Abweichung zwischen dem tatsächlichen Bewegungsfortschritt und dem prognostizierten Bewegungsfortschritt festgestellt wird, kann eine Neuberechnung der Bewegungsroute initiiert werden, wobei dann ausgehend von den veränderten Randbedingungen eine modifizierte Bewegungsroute berechnet wird, die allerdings wiederum die Richtzeit einhält. Hat der Benutzer beispielsweise eine ungeplante Pause eingelegt und dadurch Zeit verloren, kann das Navigationssystem eine verkürzte Bewegungsroute dynamisch berechnen, die trotz des Zeitverlustes durch die Pause die Einhaltung der Richtzeit gewährleistet.

Bei der Berechnung der Bewegungsroute unter Berücksichtigung des Startpunkts, des Zielpunkts und der gewünschten Richtzeit ergeben sich vielfach keine eindeutigen Lösungen. Vielmehr ist es in den meisten Fällen so, dass die vorgegebene Routingaufgabe durch eine Vielzahl von Bewegungsrouten gelöst werden kann. Im Navigationssystem können dabei bestimmte Kriterien hinterlegt sein, um aus den verschiedenen Bewegungsrouten, die die vorgegebene Aufgabe lösen, eine Bewegungsroute auszuwählen. Beispielsweise kann die Auswahl unter Berücksichtigung besonders sehenswerter touristischer Ziele oder besonders attraktiver Fahrtstrecken, beispielsweise kurvenreicher Strecken für Motorräder, erfolgen. Alternativ zur automatischen Auswahl einer Bewegungsroute ist es auch möglich, dass mehrere Bewegungsrouten berechnet werden, die die gestellte Routingaufgabe lösen, wobei dem Benutzer anschließend zumindest zwei dieser Bewegungsrouten als Alternativen angeboten werden. Der Benutzer hat dann die Möglichkeit, aus den verschiedenen Bewegungsrouten eine auszuwählen und sich entlang dieser ausgewählten Bewegungsroute vom Startpunkt zum Zielpunkt zu begeben. Dazu ist es vorteilhaft, wenn der Benutzer die als Alternativen angebotenen Routen im Navigationssystem betrachten kann, z.B. auf der Karte. Im Anschluss kann der Benutzer dann entscheiden, welche der angebotenen Routen er auswählen will.

Um die gestellte Routingaufgabe, nämlich die Berechnung einer Bewegungsroute, die vom Startpunkt zum Zielpunkt innerhalb einer vorgegebenen Richtzeit führt, abarbeiten zu können, ist für die einfachsten Berechnungsvarianten eine bestimmte Bewegungsgeschwindigkeit als Randbedingung erforderlich. Ist nämlich die durchschnittliche, prognostizierte Bewegungsgeschwindigkeit bekannt, so kann die vorgegebene Routingberechnung relativ einfach durchgeführt werden. Die Prognose der voraussichtlichen Bewegungsgeschwindigkeit durch das Navigationssystem, insbesondere in Abhängigkeit von Staumeldungen und den zur Verfügung stehenden Straßenarten (Landstraße, Autobahn), ist aus dem Stand der Technik bekannt. Für bestimmte Anwendungen ist es jedoch besonders vorteilhaft, wenn die prognostizierte Bewegungsgeschwindigkeit vom Benutzer als zusätzliche Randbedingung vorgegeben werden kann. Beispielsweise bei der Planung von Fitnessläufen oder Stadtführungen durch das Navigationssystem ist es vorteilhaft, wenn der Benutzer seine eigene Bewegungsgeschwindigkeit als Randbedingung einstellen kann.

Alternativ dazu ist es auch denkbar, dass der Benutzer lediglich seine Fortbewegungsart, beispielsweise als Fußgänger, als Dauerläufer, als Fahrradfahrer, als Motorradfahrer oder als Autofahrer, vorgeben kann. Abhängig von dieser vorgegebenen Fortbewegungsart kann dann das Navigationssystem unter Berücksichtigung bestimmter Kriterien, beispielsweise bekannter Durchschnittsgeschwindigkeiten von Fußgängern, Fahrrädern, Motorrädern oder Autos, die prognostizierte Bewegungsgeschwindigkeit automatisch ableiten. Dabei ist es besonders vorteilhaft, wenn zusätzlich auch noch die Wegenetzdatenbank ausgewertet wird, da die Fortbewegungsgeschwindigkeit in den einzelnen Fortbewegungsarten vielfach auch stark von den zur Verfügung stehenden Streckenabschnitten abhängt.

Erfindungsgemäß beruht das Navigationsverfahren darauf, dass eine Bewegungsroute gesucht wird, zu deren Bewältigung der Benutzer eine prognostizierte Bewegungszeit braucht, die im Wesentlichen mit der vom Benutzer vorgegebenen Richtzeit übereinstimmt. In den allermeisten Fällen wird es jedoch nicht möglich sein, eine Bewegungsroute zu berechnen, die in exakt genau der Richtzeit zurückgelegt werden kann. Dies bedeutet mit anderen Worten, dass beim Vergleich zwischen prognostizierter Bewegungszeit und der vorgegebenen Richtzeit bevorzugt ein Toleranzwert berücksichtigt werden sollte. Liegt diese zu einer Bewegungsroute prognostizierte Bewegungszeit innerhalb des Toleranzbereichs um die Richtzeit, wird die Bewegungsroute als Lösung der Routingaufgabe angenommen. Liegt die prognostizierte Bewegungszeit außerhalb des Toleranzbereichs, gilt die Bewegungsroute nicht als Lösung der Routingaufgabe.

Der Toleranzbereich um die vorgegebene Richtzeit kann fest voreingestellt sein, um beispielsweise in Prozent die vorgegebene Richtzeit anzugeben. Beispielsweise ist es denkbar, dass alle Bewegungsrouten als Lösung der Routingaufgabe angenommen werden, die lediglich eine dreiprozentige Abweichung der prognostizierten Bewegungszeit gegenüber der vorgegebenen Richtzeit aufweisen. Abhängig von der vorgegebenen Toleranz ergeben sich im Ergebnis also entsprechend mehr oder weniger Lösungsrouten. Nach einer bevorzugten Ausführungsform des Verfahrens ist deshalb vorgesehen, dass der Toleranzwert durch den Benutzer veränderbar ist, um auf diese Weise Einfluss auf die als Lösung angegebenen Lösungsrouten nehmen zu können.

Bei den aus dem Stand der Technik bekannten Navigationssystemen ist es Hauptaufgabe, den Benutzer von einem Startpunkt X zu einem Zielpunkt Y zu führen. Durch den Einsatz des erfindungsgemäßen Verfahrens kann eine neuartige Einsatzmöglichkeit für Navigationssysteme vorgeschlagen werden, die von dem Einsatzzweck der Benutzerführung vom Startpunkt X zum Zielpunkt Y signifikant abweicht. Gemäß dieser Verfahrensvariante stimmen Startpunkt und Zielpunkt miteinander überein. D. h. die Randbedingung der zu lösenden Routingaufgabe ist die Berechnung eines Rundkurses, der den Benutzer vom Startpunkt X innerhalb der vorgegebenen Richtzeit wieder zum Startpunkt X zurückführt. Die Berechnung derartiger Rundkurse ist insbesondere für Freizeitaktivitäten, beispielsweise für Wanderungen, Fitnessläufe, Stadtbesichtigungen, Motorradtouren oder Autotouren, von großer Bedeutung. Der Benutzer hat dann die Möglichkeit, einen Startpunkt, beispielsweise seinen aktuellen Standort, und die ihm zur Verfügung stehende Zeit als Richtzeit vorzugeben. Das Navigationssystem errechnet dann automatisch einen Rundkurs, der den Benutzer innerhalb der vorgegebenen Richtzeit wieder zurück zu seinem Ausgangspunkt führt.

Um die Bedienung für den Benutzer möglichst intuitiv und einfach zu gestalten, wird als Startpunkt automatisch der aktuelle Standort beim Start der Berechnung der Bewegungsroute übernommen. Bei dieser Verfahrensvariante wäre zur Berechnung eines Rundkurses beispielsweise nur noch die Eingabe der vorgegebenen Richtzeit erforderlich, wobei das Navigationssystem anschließend ohne weitere Angaben automatisch die notwendige Bewegungsroute berechnet. Alternativ bzw. additiv zur Verfahrensvariante zur Berechnung eines Rundkurses kann nach einer weiteren Verfahrensvariante auch die Eingabe von Zwischenzielpunkten vorgesehen sein. Dem Navigationssystem werden also zur Berechnung der Bewegungsroute zweite Randbedingungen als Zwischenzielpunkte vorgegeben, die in der Bewegungsroute enthalten sein müssen. Dadurch hätte der Benutzer beispielsweise die Möglichkeit, bestimmte Zwischenziele, beispielsweise touristische Sehenswürdigkeiten, fest vorzugeben, um zu gewährleisten, dass die vom Navigationssystem errechnete Bewegungsroute an diesem Zwischenziel vorbeiführt.

Besonders einfach kann die Eingabe vom Startpunkt, Zielpunkt und/oder Zwischenzielpunkt gestaltet werden, wenn diese in der Wegenetzdatenbank gespeichert sind. Es kann sich dabei um in der Wegenetzdatenbank gespeicherte Adressen, Interessensorte (Points of Interest), Ortschaften oder auch Regionen, beispielsweise Naturschutzgebiete oder Gebirgszüge, handeln. Es kann auch nur eine Region, beispielsweise ein Naturschutzgebiet (Rhön) oder ein Gebirgszug (Allgäu, Spessart, Zillertal), eingegeben werden.

Bei der Berechnung der Route unter Vorgabe einer bestimmten Region ist es vorteilhaft, dass ein Verlassen dieser Region vermieden bzw. ausgeschlossen wird. Dadurch kann insbesondere ein Rundkurs auf die entsprechende Region begrenzt werden. Wird die Region als Zwischenziel angegeben, führt die Route über diese Region

Die Lösung der vorgegebenen Routingaufgabe hängt auch davon ab, ob die vorgegebene Richtzeit die Überwindung der vorgegebenen Strecke zwischen Startpunkt und Zielpunkt überhaupt ermöglicht. Wird nämlich die Richtzeit zu kurz gewählt, kann keine Bewegungsroute die gestellte Routingaufgabe lösen. Bei den meisten bekannten Navigationssystemen sind Berechnungsmethoden zur Berechnung der schnellsten Bewegungszeit, die sich bei Einhaltung der schnellsten Bewegungsroute zwischen Startpunkt und Zielpunkt ergibt, ohnehin vorhanden. Um unlösbare Routingaufgaben durch Vorgabe zu kurzer Richtzeiten zu vermeiden bzw. den Benutzer auf die Vorgabe zu kurzer Richtzeiten hinzuweisen, ist es deshalb besonders vorteilhaft, wenn die vorgegebene Richtzeit mit der schnellsten prognostizierten Bewegungszeit verglichen wird. Falls die vorgegebene Richtzeit dabei kürzer als die schnellste prognostizierte Bewegungszeit ist, bedeutet dies, dass die Routingaufgabe nicht gelöst werden kann. In diesem Fall kann dem Benutzer ein Hinweis auf die Unstimmigkeit gegeben werden. Alternativ dazu ist auch denkbar, dass der Benutzer zur Eingabe einer neuen, längeren Richtzeit aufgefordert wird, um die Routingaufgabe dann lösen zu können. Weiterhin ist es denkbar, dass das Navigationssystem automatisch die schnellste prognostizierte Bewegungszeit automatisch als neue Richtzeit übernimmt und die entsprechende Bewegungsroute anzeigt. Auch kann die Zeitdifferenz zwischen der vorgegebenen Richtzeit und der schnellsten prognostizierten Bewegungszeit angegeben werden, um dem Benutzer die Unterscheidung der theoretisch schnellsten Strecke qualitativ bzw. quantitativ anzuzeigen.

Bei Verwendung des erfindungsgemäßen Verfahrens zur Navigation von Kraftfahrzeugen stellen Verkehrsstörungen eine im Vorfeld unberechenbare Störgröße dar. Es ist deshalb besonders vorteilhaft, wenn bei der dynamischen Neuberechnung auch Verkehrsinformationen, insbesondere TMC-Staumeldungen, berücksichtigt werden. Erkennt das System beispielsweise, dass auf der geplanten Bewegungsroute eine signifikante Verkehrsstörung liegt, besteht die Möglichkeit, die Bewegungsroute neu zu berechnen, wobei dann als Randbedingung zum einen die Einhaltung der Richtzeit und zum anderen die Umfahrung des Bereichs von Verkehrsstörungen berücksichtigt wird.

Das erfindungsgemäße Verfahren beruht auf der Berücksichtigung der Zeit als Anfangsrandbedingung. Nach einer bevorzugten Verfahrensvariante wird dabei nicht nur die gewünschte Bewegungszeit als Richtzeit vorgegeben, sondern es können über die Eingabeeinrichtung auch gewünschte Pausenzeiten eingegeben und bei der Berechnung der Bewegungsroute berücksichtigt werden. Bei der Planung einer Tour hat der Benutzer also die einfache Möglichkeit, bestimmte Pausenzeiten, eventuell auch unter Angabe des gewünschten Pausenortes, vorzugeben. Der Pausenort kann somit als Zwischenziel mit einer gewünschten Pausenzeit verbunden werden. Das System errechnet dann eine Bewegungsroute, die die gewünschte Pausenzeit am gewünschten Pausenzwischenziel einhält.

Wie bereits erläutert, liefert die gestellte Routingaufgabe nicht eindeutige Lösungen, sondern vielfach ist eine Vielzahl von alternativen Bewegungsrouten denkbar, die die gleichen Anfangsrandbedingungen, nämlich die Überwindung der Strecke zwischen Startpunkt und Zielpunkt, in der vorgegebenen Richtzeit lösen. Es ist deshalb besonders sinnvoll, wenn die unterschiedlichen Alternativrouten bewertet werden können, um aus den Alternativen automatisch eine Bewegungsroute auszuwählen und dem Benutzer vorzuschlagen. Ein Weg zur Bewertung der Bewegungsrouten ist es, dass die Wegenetzdatenbank Bewertungsdaten zu den einzelnen Routenabschnitten, wobei es sich um Wegabschnitte oder Einzelziele handeln kann, enthält. Beispielsweise ist es denkbar, dass die einzelnen Routenabschnitte unter dem Blickwinkel ihrer touristischen Relevanz gewichtet sind. Unter Berücksichtigung dieser Bewertungsdaten können dann die alternativen Bewegungsrouten unter dem entsprechenden Gesichtspunkt, beispielsweise dem Gesichtspunkt der touristischen Relevanz, automatisch bewertet werden, wobei dann die Bewegungsroute angeboten wird, die die höchste Bewertung erhält.

Bei bestimmten Verwendungen, beispielsweise bei der Planung von Motorraddtouren ausgehend von einem bestimmten Urlaubsort, kann es vorkommen, dass der Benutzer die Angabe verschiedener Bewegungsrouten wünscht, die jeweils den gleichen Startpunkt bzw. Zielpunkt haben. In diesem Fall besteht die Gefahr, dass das Navigationssystem aufgrund seiner Bewertungen jeweils die gleiche Bewegungsroute angibt. Um dies zu verhindern, ist es denkbar, dass die Bewertung von Routenabschnitten, die bereits befahren wurden, herabgesetzt wird. Die Bewertung von noch nicht befahrenen Routenabschnitten wird dadurch relativ erhöht und erhöht damit die Wahrscheinlichkeit der Berücksichtigung bei der nächsten vom Navigationssystem vorgeschlagenen Bewegungsroute.

Soweit die Bewertung bereits befahrener Routenabschnitte herabgesetzt wird, ist es besonders sinnvoll, dass die Herabsetzung zeitabhängig ist. Ist nämlich bereits eine relativ lange Zeit zwischen dem letzten Befahren des Routenabschnittes der nächsten geplanten Route vergangen, ist das erneute Befahren weniger kritisch, als wenn erst sehr kurze Zeit seit dem letzten Befahren vergangen ist.

Nach einer weiteren Verfahrensvariante hat der Benutzer die Möglichkeit, einzelne Routenabschnitte über die Eingabeeinrichtung zu sperren und damit von der Berechnung der Bewegungsroute auszuschließen. Auf diese Weise hat der Benutzer die Möglichkeit, Routenabschnitte, die er auf keinen Fall benutzen möchte, beispielsweise auf Grund erhöhter Gefahren oder wegen sonstiger Randbedingungen, beispielsweise der Mautpflicht, von Anfang an auszuschließen. Für das erfindungsgemäße Verfahren ergeben sich eine Vielzahl von neuen Anwendungsmöglichkeiten, insbesondere für Städteführungen, Museumsführungen, für die Planung von Laufstrecken, die Planung von Wanderstrecken, die Planung von Fahrradtouren, die Planung von Motorradtouren oder die Planung von Autotouren.

Die Berechnung der Bewegungsroute mit dem erfindungsgemäßen Verfahren kann dabei entweder auf einem mobilen Navigationsgerät mit Ortungsempfänger, insbesondere GPS-Empfänger, durchgeführt werden, um den Benutzern nicht nur die Bewegungsroute zu berechnen, sondern sie durch entsprechende Navigationsanweisungen entlang der Bewegungsroute zu führen. Alternativ dazu kann das erfindungsgemäße Verfahren aber auch rein als Planungsinstrument benutzt werden und beispielsweise auf einem Personalcomputer oder einem Internetportal ausgeführt werden.

## Patentansprüche

1. Verfahren zum Betrieb eines Navigationssystems zur Berechnung einer Bewegungsroute, wobei ein Startpunkt und ein Zielpunkt über eine Eingabeeinrichtung eingegeben werden, und wobei ein Routenrechner unter Einbeziehung von Wegenetzdaten eine Bewegungsroute berechnet, die vom Startpunkt zum Zielpunkt führt, wobei zusätzlich eine Richtzeit über die Eingabeeinrichtung eingegeben wird, wobei der Routenrechner unter Einbeziehung der Wegenetzdaten eine Bewegungsroute berechnet, die in einer der Richtzeit im Wesentlichen entsprechenden, prognostizierten Bewegungszeit vom Startpunkt zum Zielpunkt führt,
**dadurch gekennzeichnet,**
**dass** der tatsächliche Bewegungsfortschritt mit dem prognostizierten Bewegungsfortschritt dynamisch verglichen wird, wobei bei Abweichungen zwischen tatsächlichem Bewegungsfortschritt und dem prognostizierten Bewegungsfortschritt eine Neuberechnung der Bewegungsroute zur Einhaltung der Richtzeit dynamisch erfolgt.

2. Verfahren nach Anspruch 1,
**dadurch gekennzeichnet,**
**dass** mehrere Bewegungsrouten berechnet werden, die in einer der Richtzeit im Wesentlichen entsprechenden, prognostizierten Bewegungszeit vom Startpunkt zum Zielpunkt führen, wobei zumindest zwei der Bewegungsrouten als Alternativen angeboten werden.

3. Verfahren nach Anspruch 1 oder 2,
**dadurch gekennzeichnet,**
**dass** die Berechnung der Bewegungsroute unter Einbeziehung einer prognostizierten Bewegungsgeschwindigkeit erfolgt.

4. Verfahren nach Anspruch 3,
**dadurch gekennzeichnet,**
**dass** die prognostizierte Bewegungsgeschwindigkeit vorgegeben werden kann.

5. Verfahren nach Anspruch 3,
**dadurch gekennzeichnet,**
**dass** eine Fortbewegungsart vorgegeben werden kann, wobei aus der Fortbewegungsart die prognostizierte Bewegungsgeschwindigkeit, insbesondere unter Berücksichtigung der Wegenetzdatenbank, automatisch abgeleitet wird.

6. Verfahren nach einem der Ansprüche 1 bis 5,
**dadurch gekennzeichnet,**
**dass** beim Vergleich zwischen Richtzeit und prognostizierter Bewegungszeit ein Toleranzwert berücksichtigt wird.

7. Verfahren nach Anspruch 6,
**dadurch gekennzeichnet,**
**dass** der Toleranzwert veränderbar ist.

8. Verfahren nach einem der Ansprüche 1 bis 7,
**dadurch gekennzeichnet,**
**dass** der Startpunkt und der Zielpunkt miteinander übereinstimmen und der Routenrechner einen Rundkurs berechnet, der vom Startpunkt wieder zum Startpunkt führt.

9. Verfahren nach einem der Ansprüche 1 bis 8,
**dadurch gekennzeichnet,**
**dass** als Startpunkt automatisch der aktuelle Standort beim Start der Berechnung der Bewegungsroute übernommen wird.

10. Verfahren nach einem der Ansprüche 1 bis 9,
**dadurch gekennzeichnet,**
**dass** zusätzlich zumindest ein Zwischenzielpunkt über die Eingabeeinrichtung eingegeben wird, wobei der Routenrechner unter Einbeziehung der Wegenetzdaten eine Bewegungsroute berechnet, die in einer der Richtzeit im Wesentlichen entsprechenden, prognostizierten Bewegungszeit vom Startpunkt über den Zwischenzielpunkt zum Zielpunkt führt.

11. Verfahren nach einem der Ansprüche 1 bis 10,
**dadurch gekennzeichnet,**
**dass** es sich bei dem Startpunkt und/oder Zielpunkt und/oder Zwischenzielpunkt um eine in der Wegenetzdatenbank gespeicherte Adresse und/oder einen in der Wegenetzdatenbank gespeicherten Interessensort (Point of Interest) und/oder eine in der Wegenetzdatenbank gespeicherte Ortschaft und/oder eine in der Wegenetzdatenbank gespeicherte Region handelt.

12. Verfahren nach Anspruch 11,
**dadurch gekennzeichnet,**
**dass** bei Berechnung der Bewegungsroute, insbesondere bei Berechnung eines Rundkurses, der vom Startpunkt wieder zum Startpunkt führt, die vom Benutzer vorgegebene Region nicht verlassen wird.

13. Verfahren nach einem der Ansprüche 1 bis 12,
**dadurch gekennzeichnet,**
**dass** die Richtzeit mit der schnellsten prognostizierten Bewegungszeit, die sich bei Einhaltung der schnellsten Bewegungsroute zwischen Startpunkt und Zielpunkt ergibt, verglichen wird, wobei, falls die Richtzeit kürzer als die schnellste prognostizierte Bewegungszeit ist,
a) ein Hinweis auf diese Unstimmigkeit gegeben wird und/oder
b) der Benutzer zur Eingabe einer neuen, längeren Richtzeit aufgefordert wird und/oder
c) die schnellste prognostizierte Bewegungszeit automatisch als neue Richtzeit übernommen wird und/oder
d) die Zeitdifferenz zwischen Richtzeit und der schnellsten prognostizierten Bewegungszeit angegeben wird.

14. Verfahren nach einem der Ansprüche 1 bis 13,
**dadurch gekennzeichnet,**
**dass** bei wesentlichen Änderungen des prognostizierten Bewegungsfortschritts eine Neuberechnung der Bewegungsroute zur Einhaltung der Richtzeit durch Abkürzung der Bewegungsroute dynamisch erfolgt.

15. Verfahren nach Anspruch 14,
**dadurch gekennzeichnet,**
**dass** Verkehrsinformationen, insbesondere TMC-Staumeldungen, empfangen und bei der Berechnung des prognostizierten Bewegungsfortschritts dynamisch berücksichtigt werden.

16. Verfahren nach Anspruch 15,
**dadurch gekennzeichnet,**
**dass** bei wesentlichen Änderungen des prognostizierten Bewegungsfortschritts aufgrund von Verkehrsstörungen eine Neuberechnung der Bewegungsroute zur Einhaltung der Richtzeit durch Umfahrung der Bereiche mit Verkehrsstörungen dynamisch erfolgt.

17. Verfahren nach einem der Ansprüche 1 bis 16,
**dadurch gekennzeichnet,**
**dass** gewünschte Pausenzeiten über die Eingabeeinrichtung eingegeben und bei der Berechnung der Bewegungsroute berücksichtigt werden.

18. Verfahren nach Anspruch 17,
**dadurch gekennzeichnet,**
**dass** einer Pausenzeit ein Pausenzielpunkt zugeordnet wird, wobei der Pausenzielpunkt über die Eingabeeinrichtung eingegeben oder unter Einbeziehung der Wegenetzdaten automatisch generiert wird.

19. Verfahren nach einem der Ansprüche 1 bis 18,
**dadurch gekennzeichnet,**
**dass** die Wegenetzdatenbank Bewertungsdaten zur insbesondere touristischen Bewertung der gespeicherten Routenabschnitte enthält, wobei Routenabschnitte mit hoher Bewertung gegenüber Routenabschnitten mit niedriger Bewertung bei der Berechnung der Bewegungsroute bevorzugt werden.

20. Verfahren nach Anspruch 19,
**dadurch gekennzeichnet,**
**dass** die Bewertung bereits befahrener Routenabschnitte herabgesetzt wird.

21. Verfahren nach Anspruch 20,
**dadurch gekennzeichnet,**
**dass** die Herabsetzung der Bewertung bereits befahrener Routenabschnitte abhängig von der Zeit seit dem letzten Befahren des Routenabschnitts verändert wird.

22. Verfahren nach einem der Ansprüche 1 bis 21,
**dadurch gekennzeichnet,**
**dass** ein Routenabschnitt über die Eingabeeinrichtung gesperrt wird und **dadurch** bei der Berechnung der Bewegungsroute ausgeschlossen ist.

23. Verfahren nach einem der Ansprüche 1 bis 22,
**dadurch gekennzeichnet,**
**dass** mit dem Verfahren eine Städteführung oder eine Museumsführung oder eine Laufstrecke oder eine Wanderstrecke oder eine Fahrradtour oder eine Motorradtour oder eine Autotour berechnet wird.

24. Verfahren nach einem der Ansprüche 1 bis 23,
**dadurch gekennzeichnet,**
**dass** die Berechnung der Bewegungsroute auf einem mobilen Navigationsgerät oder auf einem Personalcomputer oder einem Internetportal ausgeführt wird.

## Claims

1. A method for operating a navigation system for calculating a travel route, whereby a starting point and a destination point are entered via an input device, and whereby a trip calculator calculates a travel route leading from the starting point to the destination point by taking into account road network data, whereby a guideline time is additionally entered via the input device, whereby the trip calculator calculates a travel route by taking into account the road network data, the travel route leading from the starting point to the destination point in a predicted travel time that corresponds essentially to the guideline time.
**characterized in that**
the actual travel progress is compared dynamically with the predicted travel progress, whereby the travel route is recalculated dynamically to maintain the guideline time if there are deviations between the actual travel progress and the predicted travel progress.

2. The method according to Claim 1,
**characterized in that**
multiple travel routes are calculated, leading from the starting point to the destination point in a predicted travel time that corresponds essentially to the guideline time, whereby at least two of the travel routes are offered as alternatives.

3. The method according to Claim 1 or 2,
**characterized in that**
the travel route is calculated by taking into account a predicted speed of travel.

4. The method according to Claim 3,
**characterized in that**
the predicted speed of travel can be preselected.

5. The method according to Claim 3,
**characterized in that**
a type of locomotion can be preselected, whereby the predicted speed of travel is derived automatically from the type of locomotion, in particular by taking into account the road network database.

6. The method according to any one of Claims 1 through 5,
**characterized in that**
a tolerance value is taken into account in a comparison between the guideline time and the predicted travel time.

7. The method according to Claim 6,
**characterized in that**
the tolerance value is variable.

8. The method according to any one of Claims 1 through 7,
**characterized in that**
the starting point and the destination point correspond to one another and the trip calculator calculates a round trip leading from the starting point back to the starting point.

9. The method according to any one of Claims 1 through 8,
**characterized in that**
the current location is accepted automatically as the starting point at the start of calculation of the travel route.

10. The method according to any one of Claims 1 through 9,
**characterized in that**
additionally at least one intermediate destination point is entered via the input device, whereby the trip calculator calculates a travel route leading from the starting point to the destination point by taking into account the road network data, said travel route going via an intermediate destination point in a predicted travel time which corresponds essentially to the guideline time.

11. The method according to any one of Claims 1 through 10,
**characterized in that**
the starting point and/or destination point and/or intermediate destination point is/are an address stored in the road network database and/or a point of interest stored in the road network database and/or a town stored in the road network database and/or a region stored in the road network database.

12. The method according to Claim 11,
**characterized in that**
the route does not depart from the region preselected by the user in calculation of the travel route, in particular in calculation of a round trip leading from the starting point back to the starting point.

13. The method according to any one of Claims 1 through 12,
**characterized in that**
the guideline time is compared with the fastest predicted travel time obtained by maintaining the fastest travel route between the starting point and the destination point, whereby, if the guideline time is shorter than the fastest predicted travel time,
a) an indication of this lack of correspondence is given and/or
b) the user is instructed to enter a new longer guideline time and/or
c) the fastest predicted travel time is automatically accepted as the new guideline time and/or
d) the time difference between the guideline time and the fastest predicted travel time is given.

14. The method according to any one of Claims 1 through 13,
**characterized in that**
with significant changes in the predicted travel progress, the travel route is recalculated dynamically to maintain the guideline time by shortening the travel route.

15. The method according to Claim 14,
**characterized in that**
traffic information, in particular TMC traffic jam reports, are received and taken into account dynamically in calculation of the predicted travel progress.

16. The method according to Claim 15,
**characterized in that**
when there are significant changes in the predicted travel progress due to traffic disruptions, the travel route is recalculated dynamically to maintain the guideline time by bypassing the areas with traffic disruptions.

17. The method according to any one of Claims 1 through 16,
**characterized in that**
desired break times are entered via the input device and are taken into account in calculating the travel route.

18. The method according to Claim 17,
**characterized in that**
a break destination point is assigned to a break time, whereby the break destination point is entered via the input device or is generated automatically by taking into account the road network data.

19. The method according to any one of Claims 1 through 18,
**characterized in that**
the road network database contains evaluation data for tourist evaluation of the stored route segments in particular, whereby route segments with a high evaluation are preferred over route segments having a low evaluation in calculation of the travel route.

20. The method according to Claim 19,
**characterized in that**
the evaluation of route segments that have already been traveled is lowered.

21. The method according to Claim 20,
**characterized in that**
the lowering of the evaluation of route segments that have already been traveled is varied as a function of the time since the last time the route segment was traveled.

22. The method according to any one of Claims 1 through 21,
**characterized in that**
a route segment is blocked via the input device and thereby ruled out in calculation of the travel route.

23. The method according to any one of Claims 1 through 22,
**characterized in that**
a city tour or a museum tour or a jogging route or a hiking route or a bicycle tour or a motorcycle tour or an automobile tour is calculated with this method.

24. The method according to any one of Claims 1 through 23,
**characterized in that**
the calculation of the travel route is performed on a mobile navigation device or on a personal computer or on an Internet portal.

## Revendications

1. Procédé pour l'opération d'un système de navigation pour le calcul d'un itinéraire, dans lequel un point de départ et une destination sont entrés via un dispositif d'entrée, et dans lequel un calculateur d'itinéraire calcule un itinéraire menant du point de départ jusqu'à la destination, en tenant compte de données de réseaux routiers, dans lequel en outre un temps indicatif est entré via le dispositif d'entrée, dans lequel le calculateur d'itinéraire calcule un itinéraire en tenant compte des données de réseaux routiers, ledit itinéraire menant du point de départ jusqu'à la destination dans un temps prédit du trajet correspondant essentiellement au temps indicatif,
**caractérisé en ce que**
le progrès réel dans le trajet est comparé dynamiquement avec le progrès prédit dans le trajet, l'itinéraire étant recalculé dynamiquement afin de maintenir le temps indicatif s'il y a des déviations entre le progrès réel dans le trajet et le progrès prédit dans le trajet.

2. Procédé selon la revendication 1,
**caractérisé en ce que**
plusieurs itinéraires sont calculés, menant du point de départ jusqu'à la destination dans un temps prédit du trajet correspondant essentiellement au temps indicatif, au moins deux desdits itinéraires étant proposés comme alternatives.

3. Procédé selon la revendication 1 ou 2,
**caractérisé en ce que**
le calcul de l'itinéraire est effectué en tenant compte d'une vitesse prédite sur le trajet.

4. Procédé selon la revendication 3,
**caractérisé en ce que**
la vitesse prédite sur le trajet peut être présélectionnée.

5. Procédé selon la revendication 3,
**caractérisé en ce qu'**
un type de locomotion peut être présélectionné, la vitesse prédite sur le trajet étant dérivée automatiquement du type de locomotion, en particulier en tenant compte de la base de données de réseaux routiers.

6. Procédé selon l'une quelconque des revendications 1 à 5,
**caractérisé en ce qu'**
une valeur de tolérance est prise en compte lors d'une comparaison entre le temps indicatif et le temps prédit sur le trajet.

7. Procédé selon la revendication 6,
dans lequel
la valeur de tolérance est variable.

8. Procédé selon l'une quelconque des revendications 1 à 7,
**caractérisé en ce que**
le point de départ et la destination correspondent l'un à l'autre et le calculateur d'itinéraire calcule un circuit ramenant du point de départ au point de départ.

9. Procédé selon l'une quelconque des revendications 1 à 8,
**caractérisé en ce que**
l'emplacement actuel est accepté automatiquement comme point de départ au début du calcul de l'itinéraire.

10. Procédé selon l'une quelconque des revendications 1 à 9,
**caractérisé en ce qu'**
en outre au moins une destination intermédiaire est entrée via le dispositif d'entrée, le calculateur de trajet calculant un itinéraire menant du point de départ jusqu'à la destination, en tenant compte des données de réseaux routiers, ledit itinéraire passant par une destination intermédiaire dans un temps prédit du trajet qui correspond essentiellement au temps indicatif.

11. Procédé selon l'une quelconque des revendications 1 à 10,
**caractérisé en ce que**
le point de départ et/ou la destination et/ou la destination intermédiaire est/sont une adresse stockée dans la base de données de réseaux routiers et/ou un point d'intérêt stocké dans la base de données de réseaux routiers et/ou une localité stockée dans la base de données de réseaux routiers et/ou une région stockée dans la base de données de réseaux routiers.

12. Procédé selon la revendication 11,
**caractérisé en ce que**
le trajet ne s'écarte pas de la région présélectionnée par l'utilisateur lors du calcul de l'itinéraire, en particulier lors du calcul d'un circuit ramenant du point de départ au point de départ.

13. Procédé selon l'une quelconque des revendications 1 à 12,
**caractérisé en ce que**
le temps indicatif est comparé avec le temps prédit du trajet le plus rapide obtenu par le maintien de l'itinéraire le plus rapide entre le point de départ et la destination, dans lequel, lorsque le temps indicatif est plus court que le temps prédit du trajet le plus rapide,
a) une indication de ladite absence de correspondance est fournie et/ou
b) l'utilisateur est invité à entrer un nouveau temps indicatif étant plus long et/ou
c) le temps prédit du trajet le plus rapide est accepté automatiquement comme nouveau temps indicatif et/ou
d) la différence de temps entre le temps indicatif et le temps prédit du trajet le plus rapide est fournie.

14. Procédé selon l'une quelconque des revendications 1 à 13,
**caractérisé en ce que**
lorsqu'il y a des changements notables dans le progrès prédit dans le trajet, l'itinéraire est recalculé dynamiquement afin the maintenir le temps indicatif en raccourcissant l'itinéraire.

15. Procédé selon la revendication 14,
**caractérisé en ce que**
des informations de trafic, en particulier des informations de trafic TMC, sont reçues et prises en compte dynamiquement lors du calcul du progrès prédit dans le trajet.

16. Procédé selon la revendication 15,
**caractérisé en ce que**
lorsqu'il y a des changements notables dans le progrès prédit dans le trajet en raison de perturbations de trafic, l'itinéraire est recalculé dynamiquement afin de maintenir le temps indicatif en contournant les régions affectées par les perturbations de trafic.

17. Procédé selon l'une quelconque des revendications 1 à 16,
**caractérisé en ce que**
des temps de pause souhaités sont entrés via le dispositif d'entrée et sont pris en compte lors du calcul de l'itinéraire.

18. Procédé selon la revendication 17,
**caractérisé en ce qu'**
une destination de pause est associée à un temps de pause, la destination de pause étant entrée via le dispositif d'entrée ou étant générée automatiquement en tenant compte des données de réseaux routiers.

19. Procédé selon l'une quelconque des revendications 1 à 18,
**caractérisé en ce que**
la base de données de réseaux routiers contient des données d'évaluation, en particulier pour l'évaluation touristique des segments de l'itinéraire stockés, des segments de l'itinéraire avec une évaluation haute étant préférés à des sections de l'itinéraire avec une évaluation basse lors du calcul de l'itinéraire.

20. Procédé selon la revendication 19,
**caractérisé en ce que**
l'évaluation des segments de l'itinéraire déjà parcourus est abaissée.

21. Procédé selon la revendication 20,
**caractérisé en ce que**
l'abaissement de l'évaluation des segments de l'itinéraire déjà parcourus est varié en fonction du temps passé depuis que le dernier segment de l'itinéraire a été parcouru.

22. Procédé selon l'une quelconque des revendications 1 à 21,
**caractérisé en ce qu'**
un segment de l'itinéraire est bloqué via le dispositif d'entrée et est par conséquent exclu lors du calcul de l'itinéraire.

23. Procédé selon l'une quelconque des revendications 1 à 22,
**caractérisé en ce qu'**
un tour de ville ou un tour de musées ou un itinéraire de jogging ou un itinéraire de randonnée ou un tour à vélo ou un tour en moto ou un tour en automobile est calculé en utilisant ledit procédé.

24. Procédé selon l'une quelconque des revendications 1 à 23,
**caractérisé en ce que**
le calcul de l'itinéraire est effectué sur un dispositif de navigation mobile ou sur un ordinateur personnel ou sur un portail internet.
